# EUROPEAN PATENT SPECIFICATION

(11) **EP 2 814 229 B1**
(45) Date of publication and mention of the grant of the patent: **12.09.2018**
(21) Application number: 13171619.3
(22) Date of filing: 12.06.2013
(51) Int. Cl.: H04M 1/725

(54) **Method of processing an incoming communication signal at a mobile communication device**
Verfahren zur Verarbeitung eines eingehenden Kommunikationssignals in einer mobilen Kommunikationsvorrichtung
Procédé de traitement d'un signal de communication entrant au niveau d'un dispositif de communication mobile

(43) Date of publication of application: 17.12.2014
(73) Proprietor: BlackBerry Limited, Waterloo, ON N2K 0A7 (CA)
(72) Inventor: Mankowski, Peter, Waterloo, Ontario N2L 3W8 (CA); Rang, Weimin, Waterloo, Ontario N2L 3W8 (CA); Wu, Xiaowei, Waterloo, Ontario N2L 3W8 (CA); Nan, Yaran, Kitchener, Ontario N2P 1H5 (CA)
(74) Representative: Hibbert, Juliet Jane Grace

(56) References cited:
- DE-A1- 19 801 566
- US-A1- 2009 221 279
- US-A1- 2011 065 375

## Description

### BACKGROUND

The use of a mobile phone or other mobile communication device by a driver of a moving vehicle has been known to cause the driver to be inattentive to his driving, resulting in a dangerous driving situation which may result in a crash or accident. Education and law enforcement are traditional methods of combatting such behavior of drivers. However, such measures are often reliant upon the personal responsibility of the driver. Even a normally responsible driver may find himself in a situation in which he decides to momentarily switch his attention away from driving to respond to a message that is sufficiently urgent, thereby endangering his life and the lives of those around him.

US patent application no. US2009221279 (A1) describes a method and apparatus for controlling use of mobile communication device while operating a vehicle, wherein the mobile communication device (MS) uses one or more ways to determine its speed while moving in order to alter the default behavior of the device based on a stored safety policy. Using existing technologies such as Global Positioning System (GPS), Assisted GPS (AGPS), Location-Based Services (LBS), Global System for Mobile (GSM), Code Division for Multiple Access (CDMA), or an accelerometer, a MS determines the current or last known state of motion to modify the behavior of the MS based on its speed and a stored safety policy. The human interface of the MS is altered to inform the user of the modification, features and functions can be disabled and enabled, the user is prompted to change their behavior, and automatic functions take place. The logging functions of the MS can be enhanced to record the motion state of the MS while using any feature of the MS.

German Patent application no. DE19801566 describes a method that involves partially switching off a mobile telephone so that the telephone does not signal all calls to the user, but only special calls (urgent or important calls or calls from close friends). A mobile telephone can be fully or partially switched off by a signal from a signal source in the form of an electrical and/or optical and/or acoustic and/or electromagnetic signal.

The invention is set out in the appended set of claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 shows an illustrative communication system suitable for handling a message received while driving;
Figure 2 shows a schematic diagram of an illustrative mobile phone according to an embodiment of the present invention;
Figure 3 shows a graph of an illustrative driving scenario which may be monitored using the mobile phone and motion sensors integrated therein;
Figure 4 shows a flowchart of an illustrative process for relaying a message from a mobile phone to a driver of a vehicle; and
Figure 5 shows a schematic diagram of an interaction between a mobile phone conveyed in a vehicle and a display of the vehicle for the purpose of relaying an incoming message to the driver of the vehicle.

### DETAILED DESCRIPTION

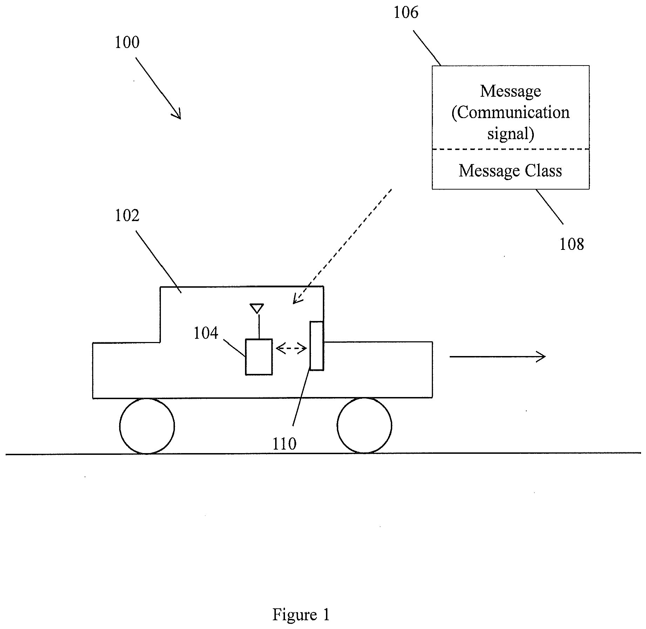

Figure 1 shows an illustrative communication system 100 suitable for handling a message received while driving. The system 100 includes a vehicle 102 that may be a car, truck, or other suitable vehicle that is driven by a driver. The vehicle 102 conveys a mobile communication device 104. In general, the mobile communication device 104 is a hand-held device for two-way communication, such as a cellular phone, a smartphone, a tablet computer, etc. For purposes of discussion, the mobile communication device 104 may be alternately referred to herein as a "mobile phone." The mobile communication device 104 may be capable of sending and receiving a communication signal or message 106 wirelessly to and from a communication network. A message 106 may refer to any form of communication signal including, for example, a voice communication, email, text, instant messaging, a video-telephonic signal, etc. The message 106 may be received from a wireless communication network. The user of the mobile communication device 104 may be a driver of the vehicle in motion, in which case receiving the incoming message may cause the driver to be inattentive to driving conditions, which may result in an accident. Therefore, the message 106 of the present application may include a message class 108 that may be used at the mobile communication device 104 to present the message 106 to the driver at an appropriate time when the driving conditions are generally acceptable as safe or in an appropriate manner that allows the driver to not be distracted by the message 106. The mobile communication device 104 may obtain the message class 108 upon receiving an incoming message 106 and perform an action related to delivering the message 106 to the driver using the message class 108 and the methods disclosed herein.

The vehicle 102 may include an interactive display 110 that may be a dashboard display in one embodiment. The display 110 may include a visual display for displaying text and/or images and may include a processor, memory, etc. The display 110 may also include a speaker and/or microphone to facilitate voice communication. The interactive display 110 may be responsive to a touch or selection made by the driver. Additionally, the display 110 may be programmed to respond to certain vocal commands by the driver, such as "Accept call" or "Ignore message," etc. The mobile phone 104 may be able to communicate with a processor (not shown) at the display 110 in order to send messages back and forth between the mobile phone 104 and the display 110. In one embodiment, the mobile phone 104 may communicate with the vehicle 102 via Bluetooth communication technology or other suitable communication technology. Thus, a message 106 received at the mobile phone 104 may be sent to the display 110 of the vehicle, wherein the display 110 may display the message as a text, an audio communication such as text-to-speech, or as a phone call. In one embodiment, an interface of the mobile phone 104 may be reproduced in total or in part at the display 110 and a selection made by the driver at an interface of the display 110 may be relayed to the mobile phone 104.

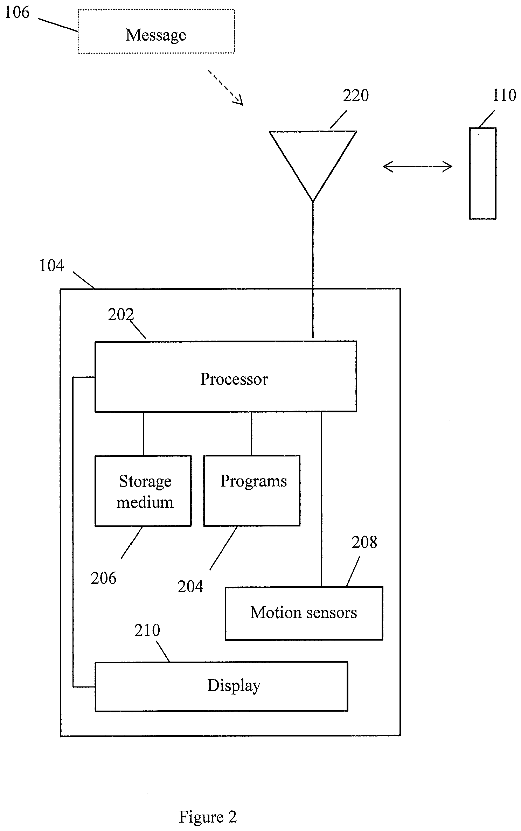

Figure 2 shows a schematic diagram of an illustrative mobile phone 104 of the present application. The mobile phone 104 includes an antenna 220 for sending and receiving a wireless message 106 to and from a communication network. In addition, the antenna 220 may be used to send signals back and forth to the display 110 of the vehicle. The mobile phone 104 may include a processor 202 that receives an incoming message 106 from the antenna 220. The processor 202 may have access to a set of programs 204 providing instructions for determining an action to take with respect to the received message. The processor 202 may also have access to a storage medium 206 that may be used to store various parameters, messages, driver's logs, as well as to store a message 106. The mobile phone 104 may further include a display 210 that may display the received message as a text and/or an image.

Motion sensors 208 are integrated into the mobile phone 104. The motion sensors 208 may include accelerometers, gyroscopes, orientation sensors, among others. The motion sensors 208 may be sensitive to motion and/or vibration in either or all of x, y, and z directions along a coordinate system of the mobile phone 104. When conveyed in a moving vehicle, the motion sensors 208 may provide one or more signals to processor 202 that are related to various motions and/or vibrations experienced by the mobile phone 104 while the vehicle is being driven, thus providing a state of motion of the vehicle. The processor 202 may use the vibration signals to create a log of a driving scenario. A driving scenario may include a sequence of events that occur during driving form a first location to a second location. In various aspects, the sequence of events may be indicative of a behavior of the driver in driving from the first location to the second location, since any two drivers may drive over the same terrain differently. An event may include, for example, driving at a selected speed for given duration, stopping (at a stop light, etc.) for a selected duration, turning right, turning left, accelerating, decelerating, shifting gears, driving over a pothole or speed bump, etc. The recorded log may include a record of various vibrations or motion signals (constant speed, acceleration, deceleration, etc.) that are detected by the motion sensors 208 and that are related to the driving scenario and/or the events that occur during the driving scenario. The characteristics of the vibrations, i.e., duration, amplitude, frequency, direction, etc. may be used to identify the event.

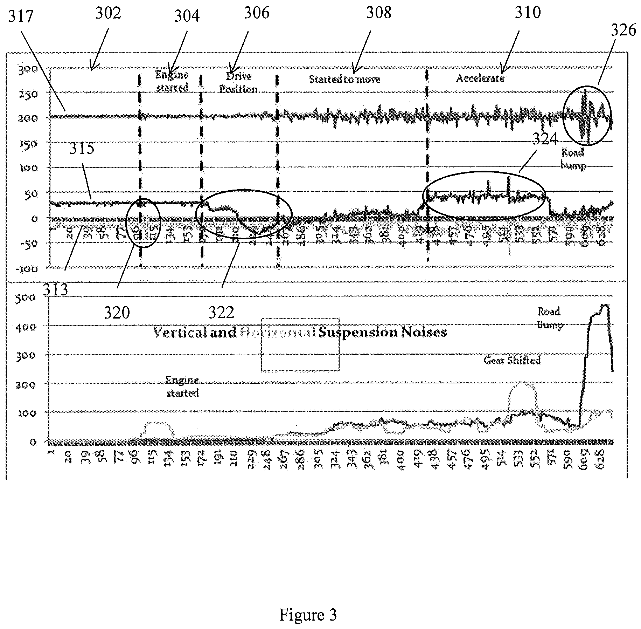

Figure 3 shows a graph of an illustrative driving scenario which may be monitored using the mobile phone 104 and its integrated motion sensors 208. In the illustrative driving scenario, the vehicle is turned off for time period 302 which lasts from 0 seconds to about 96 seconds. During time period 304 (from about 96 seconds to about 172 seconds) the car engine is started. During time period 306 (from about 172 seconds to about 260 seconds), the car is shifted into the drive gear. During time period 308 (from about 260 seconds to about 430 seconds), the vehicle starts to move. During time period 310 (after about 260 seconds), the vehicle accelerates. Around 609 seconds, the vehicle hits a road bump. Vibrations associated with each of these activities are received at the motion sensors 208 and are displayed in logs 313, 315 and 317. Log 313 records vibrations occurring in a direction extending from the front of the vehicle to the back of the vehicle using a y-directed sensor. Log 315 records vibrations occurring in an up-and-down direction using a z-directed sensor. Log 317 records vibrations in a left-to-right direction using an x-directed sensor.

During time period 302, the vehicle is turned off and none of the motion sensors 208 receive any significant vibrations. However, during time period 304, the sensor along the y-axis records vibrations associated with starting of the engine at event 320. During time period 306, the z-sensor records vibrations associated with shifting of the vehicle into a drive gear (event 322). During time period 310, the z-sensor records the acceleration of the vehicle (event 324) and the x-sensor records vibrations associated with the vehicle running over a road bump (event 326).

In one embodiment, the mobile phone 104 may record logs 313, 315 and 317 for a plurality of repetitions of the driving scenario and a statistical model of the driving scenario may be determined from the plurality of logs. The processor 202 may further record the time of day and week at which the logs are obtained in order to identify the logs to a given driving scenario, i.e., driving to work at 7:30 a.m. on Mondays, driving to tennis lessons at 2 p.m. on Saturday, etc. Since the driver generally takes a same route between a first location and a second location, processor 202 may arrive at a statistical model of the behavior of the driver for a particular terrain or driving scenario. In one embodiment, the statistical model may include a moving average of the logs, i.e., the model uses a selected number of most recent repetitions of the driving scenario. Thus, when the driver repeats the driving scenario to produce a new log, the oldest log may be thrown out and the new (most recent) log may be included with the remaining logs to compute the statistical model. In this manner, the statistical model may be continually updated to reflect any variation or changes in the driver's behavior.

In one embodiment, the mobile phone 104 may determine how and when to relay an incoming message 106 to the driver. In general, the mobile phone 104 determines how to relay the incoming message in a manner that reduces the danger (increase the safety) of relaying the message 106 and that complies with an urgency of the message 106. The mobile phone 104 makes this decision based on a determined state of motion of the vehicle and/or a determined context of the vehicle (i.e., where the vehicle is within the driving scenario) and the message class 108 of the received message 106.

A message class 108 may be a parameter that indicates a relative importance of the message to the driver. The relative importance may be taken into account when deciding when and how to relay the message to the driver. A message class 108 may have various values. In an illustrative embodiment, the message class 108 may be either "Normal," "Urgent," "Custom," or "Spam." A message that is of a "Normal" message class may be any standard communication that a person may have during a day, but which has no immediate urgency that justifies distracting or interrupting the driver while driving. A message that is "Urgent" may require the driver's attention regardless of the state of motion of the vehicle. A "Custom" message may include messages that are customized to the driver and may be related to the particular trip the driver is taking. Examples of custom messages may include: "Where are you?" "How long before you arrive?" "Please remember to stop at grocery store," etc. A message that is "Spam" may be junk email or messages that may be ignored or deleted automatically. The message 106 may be relayed to the driver based on the message class 108 and a context of the driving scenario within which the message is received.

The processor 202 may determine an action to take with respect to the message based on the statistical model of the driving scenario and the message class of the received message. Given that the model provides a pattern by which the driver runs through a selected driving scenario, the model and a state of motion that is measured when the message is received may be used to determine the context in which the message is received and therefore how to relay the incoming message to the driver. Also, the mobile phone 104 may be able to anticipate an upcoming event within the driving scenario from the model. In one example, the mobile phone 104 may determine from the model that the vehicle will come to a stop within about 30 seconds. The mobile phone 104 may then review that the message class is "Normal" and decide to delay relaying the message to the driver until the vehicle comes to a stop. In another example, the mobile phone may determine from the model that the vehicle is about to enter a highway. For an "Urgent" message class, the mobile phone may decide to relay the message to the driver once the vehicle reaches a cruising speed and to relay the message to the vehicle display 110 in order to reduce distractions to the driver. In addition, the mobile phone 104 may select a format with which to present the message. For example, a text message that is urgent but that is received under dangerous driving conditions may be converted to audio using a text-to-speech program so that the driver may keep hands on the driver's wheel.

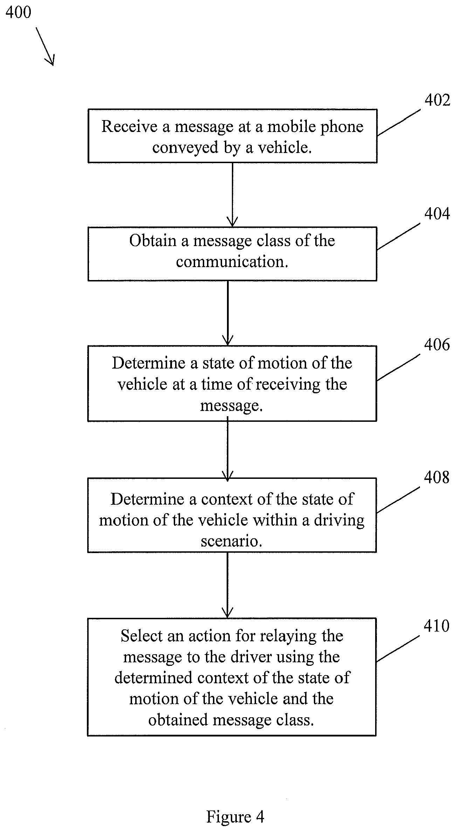

Figure 4 shows a flowchart 400 of an illustrative process for relaying a message from a mobile phone 104 to a driver of a vehicle. In block 402, a message is receive at the mobile phone 104, wherein the mobile phone 104 is being conveyed by the vehicle. In block 404, the mobile phone obtains a message class of the message. In block 406, the mobile phone determines a state of motion of the vehicle at the time of receiving the message. In block 408, the mobile phone determines a context of the state of motion of the vehicle with respect to a driving scenario. In block 410, an action is selected related to delivering the message to the driver based on the message class and the state of motion and/or context of the driving scenario.

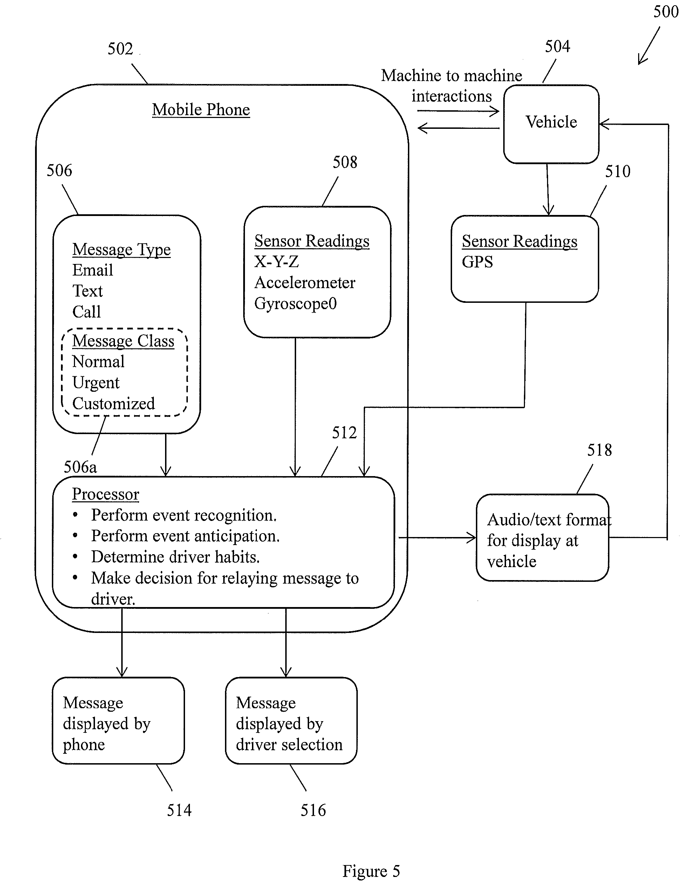

Figure 5 shows a schematic diagram 500 of an interaction between a mobile phone 502 conveyed in a vehicle 504 and a display of the vehicle 504 for the purpose of relaying an incoming message to the driver of the vehicle 504. Mobile phone 502 and vehicle 504 interact with each other using a two-way M2M (machine-to-machine) communication. The mobile phone 502 receives a message 506 which may include an email, a text, a phone call or another type of communication. The mobile phone 502 also receives the message class 506a of the message 506. The mobile phone 502 also receives motion data 508 from various X-Y-Z sensors, accelerometers and/or gyroscopes. The vehicle 504 may supply Global Positioning System (GPS) coordinates 510 which may be relayed to the mobile phone 502 for making its decision. In other embodiments, GPS coordinates may be determined at the mobile phone 502.

The message class, sensed motions and/or GPS data are sent to the processor 512, which is generally the processor of the mobile phone 502. The processor 512 may perform, for example, event recognition, event anticipation and/or determining of a user habit. From the determined event, user habit and/or event anticipation, the processor 512 makes a decision on how to relay the message to the driver. For example, the processor 512 may choose to display the message at a mobile phone display 514. Alternatively, the processor 512 may choose to notify the driver of an incoming message and display the message when the message is selected by the driver (block 516). Alternatively, the processor 512 may select an audio or text format for either displaying the message at the vehicle or a text-to-speech audio presentation using a speaker at a vehicle display 518. Other modes for relaying the message to the driver may also be selected by the processor 512.

Therefore, in one aspect, a method of communication is disclosed that includes: receiving a communication signal having a message class at a mobile communication device conveyed by a vehicle; obtaining a message class of the received communication at the mobile communication device; determining, using a processor, a state of motion of the vehicle at the mobile communication device; and using the message class and the determined state of motion to select an action to relay the communication to a driver of the vehicle.

In another aspect, a mobile communication device for use in a vehicle is disclosed that includes: a module configured to receive a communication from a network; a motion sensor configured to sense vibrations resulting from motion of the vehicle; and a processor configured to: determine a state of motion of the vehicle based on the sensed vibrations upon receiving the communication, obtain a message class of the communication, and select an action to relay the communication to a user of the mobile communication device from the determined state of motion and the obtained message class.

In another aspect, a method of providing a message to a driver of a vehicle is disclosed that includes: receiving the message at a mobile communication device conveyed by the vehicle, wherein the message includes a message class; obtaining the message class of the received message; determining a state of motion of the vehicle at the mobile communication device using a sensor; and using a processor to select an action for providing the message to the driver based on the determined state of motion of the vehicle and the obtained message class.

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of communication, comprising:
receiving a communication (106) having a message class (108) at a mobile communication device (104) conveyed by a vehicle (102), the message class comprising a parameter that indicates the relative importance of the message;
obtaining the message class (108) of the received communication (106) at the mobile communication device (104);
receiving signals from at least one motion sensor of the mobile communication device, the motion sensor being configured to sense vibrations resulting from motion of the mobile communication device in the vehicle;
determining, using a processor (202) integrated into the mobile communication device (104), a state of motion of the vehicle (102) at the mobile communication device (104) based on the signals from the at least one motion sensor upon receiving the communication;
comparing the present state of motion to a statistical model indicative of the behavior of a driver for a driving scenario and determining a context of the state of the motion within the driving scenario based on the comparison, wherein the statistical model is derived from at least one log (313, 315, 317) of vibrations recorded during a previous run through the driving scenario;
using the determined context of the state of motion to anticipate an event in the driving scenario; and
using the message class (108), and the anticipated event to select an action to relay the communication (106) to a driver of the vehicle (102), the selected action being a time at which to present the communication.

2. The method of claim 1, wherein the selected action also includes selecting at least one of: a display (110, 210) for presenting the communication (106); and a format for presenting the communication (106).

3. The method of claim 1, wherein the received communication (106) further comprises at least one of: an email message received from a wireless network; a text message received from a wireless network; and an incoming phone call received from a wireless network.

4. A mobile communication device (104) for use in a vehicle (102), comprising:
a module configured to receive a communication (106) from a network;
a motion sensor (208) configured to sense vibrations resulting from motion of the vehicle (208); and
a processor (202) configured to:
determine a state of motion of the vehicle (102) based on the vibrations sensed by the motion sensor (208) upon receiving the communication (106),
compare the state of motion to a statistical model indicative of the behavior of a driver for a driving scenario and determine a context of the state of the motion within the driving scenario based on the comparison, wherein the statistical model is derived from at least one log (313, 315, 317) of vibrations recorded during a previous run through the driving scenario,
use the determined context of the state of motion to anticipate an event in the driving scenario;
obtain a message class (108) of the communication (106), and
select an action to relay the communication (106) to a user of the mobile communication device (104) from the obtained message class (108) and the anticipated event, wherein , the selected action is a time at which to present the communication.

5. The device of claim 4, wherein the selected action also includes selecting at least one of: a display (110, 210) for presenting the communication (106); and a format for presenting the communication (106).

6. The device of claim 4, wherein the received communication (106) further comprises at least one of: an email message received from a wireless network; a text message received from a wireless network; and an incoming phone call received from a wireless network.

## Patentansprüche

1. Kommunikationsverfahren, das aufweist:
Empfangen einer Kommunikation (106) mit einer Nachrichtenklasse (108) an einer mobilen Kommunikationsvorrichtung (104), die von einem Fahrzeug (102) befördert wird, wobei die Nachrichtenklasse einen Parameter aufweist, der die relative Wichtigkeit der Nachricht angibt;
Erlangen der Nachrichtenklasse (108) der empfangenen Kommunikation (106) an der mobilen Kommunikationsvorrichtung (104);
Empfangen von Signalen von zumindest einem Bewegungssensor der mobilen Kommunikationsvorrichtung, wobei der Bewegungssensor konfiguriert ist zum Erfassen von Vibrationen, die aus einer Bewegung der mobilen Kommunikationsvorrichtung in dem Fahrzeug resultieren;
Bestimmen, unter Verwendung eines Prozessors (202), der in der mobilen Kommunikationsvorrichtung (104) integriert ist, eines Bewegungszustands des Fahrzeugs (102) an der mobilen Kommunikationsvorrichtung (104) basierend auf den Signalen von dem zumindest einen Bewegungssensor bei Empfang der Kommunikation;
Vergleichen des aktuellen Bewegungszustands mit einem statistischen Modell, das das Verhalten eines Fahrers für ein Fahr-Szenario angibt, und Bestimmen eines Kontexts des Bewegungszustands in dem Fahr-Szenario basierend auf dem Vergleich, wobei das statistische Modell von zumindest einem Protokoll (313, 315, 317) von Vibrationen abgeleitet ist, die während eines vorherigen Durchlaufs durch das Fahr-Szenario aufgezeichnet wurden;
Verwenden des bestimmten Kontexts des Bewegungszustands, um ein Ereignis in dem Fahr-Szenario zu antizipieren; und
Verwenden der Nachrichtenklasse (108) und des antizipierten Ereignisses, um eine Aktion zum Weiterleiten der Kommunikation (106) an einen Fahrer des Fahrzeugs (102) auszuwählen, wobei die ausgewählte Aktion eine Zeit ist, an der die Kommunikation zu präsentieren ist.

2. Das Verfahren gemäß Anspruch 1, wobei die ausgewählte Aktion auch ein Auswählen zumindest eines aufweist aus: einer Anzeige (110, 210) zum Präsentieren der Kommunikation (106); und einem Format zum Präsentieren der Kommunikation (106).

3. Das Verfahren gemäß Anspruch 1, wobei die empfangene Kommunikation (106) weiter zumindest eines aufweist aus: einer Email-Nachricht, die von einem drahtlosen Netzwerk empfangen wird; einer Textnachricht, die von einem drahtlosen Netzwerk empfangen wird; und einem eingehenden Telefonanruf, der von einem drahtlosen Netzwerk empfangen wird.

4. Eine mobile Kommunikationsvorrichtung (104) zur Verwendung in einem Fahrzeug (102), die aufweist:
ein Modul, das konfiguriert ist zum Empfangen einer Kommunikation (106) von einem Netzwerk;
einen Bewegungssensor (208), der konfiguriert ist zum Erfassen von Vibrationen, die aus einer Bewegung des Fahrzeugs (208) resultieren; und
einen Prozessor (202), der konfiguriert ist zum:
Bestimmen eines Bewegungszustands des Fahrzeugs (102) basierend auf den Vibrationen, die von dem Bewegungssensor (208) bei Empfang der Kommunikation (106) erfasst werden,
Vergleichen des Bewegungszustands mit einem statistischen Modell, das das Verhalten eines Fahrers für ein Fahr-Szenario angibt, und Bestimmen eines Kontexts des Bewegungszustands in dem Fahr-Szenario basierend auf dem Vergleich, wobei das statistische Modell von zumindest einem Protokoll (313, 315, 317) von Vibrationen abgeleitet ist, die während eines vorherigen Durchlaufs durch das Fahr-Szenario aufgezeichnet wurden,
Verwenden des bestimmten Kontexts des Bewegungszustands, um ein Ereignis in dem Fahr-Szenario zu antizipieren;
Erlangen einer Nachrichtenklasse (108) der Kommunikation (106), und
Auswählen einer Aktion zum Weiterleiten der Kommunikation (106) an einen Benutzer der mobilen Kommunikationsvorrichtung (104) aus der erlangten Nachrichtenklasse (108) und dem antizipierten Ereignis, wobei die ausgewählte Aktion eine Zeit ist, an der die Kommunikation zu präsentieren ist.

5. Die Vorrichtung gemäß Anspruch 4, wobei die ausgewählte Aktion auch ein Auswählen zumindest eines aufweist aus: einer Anzeige (110, 210) zum Präsentieren der Kommunikation (106); und einem Format zum Präsentieren der Kommunikation (106).

6. Die Vorrichtung gemäß Anspruch 4, wobei die empfangene Kommunikation (106) weiter zumindest eines aufweist aus: einer Email-Nachricht, die von einem drahtlosen Netzwerk empfangen wird; einer Textnachricht, die von einem drahtlosen Netzwerk empfangen wird; und einem eingehenden Telefonanruf, der von einem drahtlosen Netzwerk empfangen wird.

## Revendications

1. Procédé de communication, comprenant :
la réception d'une communication (106) ayant une classe de message (108) au niveau d'un dispositif de communication mobile (104) transporté par un véhicule (102), la classe de message comprenant un paramètre qui indique l'importance relative du message ;
l'obtention de la classe de message (108) de la communication reçue (106) au niveau du dispositif de communication mobile (104) ;
la réception de signaux en provenance d'au moins un capteur de mouvement du dispositif de communication mobile, le capteur de mouvement étant configuré pour capter des vibrations résultant du mouvement du dispositif de communication mobile dans le véhicule ;
la détermination, en utilisant un processeur (202) intégré dans le dispositif de communication mobile (104), d'un état de mouvement du véhicule (102) au niveau du dispositif de communication mobile (104) sur la base des signaux en provenance du au moins un capteur de mouvement lors de la réception de la communication ;
la comparaison de l'état de mouvement présent à un modèle statistique indicatif du comportement d'un conducteur pour un scénario de conduite et la détermination d'un contexte de l'état du mouvement dans le scénario de conduite sur la base de la comparaison, dans lequel le modèle statistique est dérivé d'au moins un journal (313, 315, 317) de vibrations enregistrées pendant un parcours précédent à travers le scénario de conduite ;
l'utilisation du contexte déterminé de l'état de mouvement pour anticiper un événement dans le scénario de conduite ; et
l'utilisation de la classe de message (108), et de l'événement anticipé pour sélectionner une action pour relayer la communication (106) à un conducteur du véhicule (102), l'action sélectionnée étant un temps auquel présenter la communication.

2. Procédé selon la revendication 1, dans lequel l'action sélectionnée inclut également la sélection d'au moins l'un de : un affichage (110, 210) pour présenter la communication (106) ; et un format pour présenter la communication (106).

3. Procédé selon la revendication 1, dans lequel la communication reçue (106) comprend en outre au moins l'un parmi : un message de courriel reçu d'un réseau sans fil ; un message texte reçu d'un réseau sans fil ; et un appel téléphonique entrant reçu d'un réseau sans fil.

4. Dispositif de communication mobile (104) destiné à être utilisé dans un véhicule (102), comprenant :
un module configuré pour recevoir une communication (106) en provenance d'un réseau ;
un capteur de mouvement (208) configuré pour capter des vibrations résultant du mouvement du véhicule (208) ; et
un processeur (202) configuré pour :
déterminer un état de mouvement du véhicule (102) sur la base des vibrations captées par le capteur de mouvement (208) lors de la réception de la communication (106),
comparer l'état de mouvement à un modèle statistique indicatif du comportement d'un conducteur pour un scénario de conduite et déterminer un contexte de l'état du mouvement dans le scénario de conduite sur la base de la comparaison, dans lequel le modèle statistique est dérivé d'au moins un journal (313, 315, 317) de vibrations enregistrées pendant un parcours précédent à travers le scénario de conduite,
utiliser le contexte déterminé de l'état de mouvement pour anticiper un événement dans le scénario de conduite ;
obtenir une classe de message (108) de la communication (106), et
sélectionner une action pour relayer la communication (106) à un utilisateur du dispositif de communication mobile (104) à partir de la classe de message obtenue (108) et de l'événement anticipé, dans lequel, l'action sélectionnée est un temps auquel présenter la communication.

5. Dispositif selon la revendication 4, dans lequel l'action sélectionnée inclut également la sélection d'au moins l'un de : un affichage (110, 210) pour présenter la communication (106) ; et un format pour présenter la communication (106).

6. Dispositif selon la revendication 4, dans lequel la communication reçue (106) comprend en outre au moins l'un parmi : un message de courriel reçu d'un réseau sans fil ; un message texte reçu d'un réseau sans fil ; et un appel téléphonique entrant reçu d'un réseau sans fil.
